# FASCICULE DE BREVET EUROPEEN

(11) **EP 3 529 313 B1**
(45) Date de publication et mention de la délivrance du brevet: **26.06.2024**
(21) Numéro de dépôt: 17797676.8
(22) Date de dépôt: 18.10.2017
(51) Int. Cl.: C08K 7/14, C08L 77/06, C08L 77/00

(54) **UTILISATION DE FIBRES DE VERRE A SECTION CIRCULAIRE DANS UN MELANGE COMPRENANT UN POLYAMIDE SEMI-AROMATIQUE ET UN POLYAMIDE ALIPHATIQUE POUR AMELIORER LES PROPRIETES MECANIQUES DUDIT MELANGE**
VERWENDUNG VON GLASFASERN MIT EINEM RUNDEN QUERSCHNITT IN EINER MISCHUNG MIT EINEM HALBAROMATISCHEN POLYAMID UND EINEM ALIPHATISCHEN POLYAMIDEN ZUR VERBESSERUNG DER MECHANISCHEN EIGENSCHAFTEN DER MISCHUNG
USE OF GLASS FIBRES HAVING A CIRCULAR CROSS-SECTION IN A MIXTURE COMPRISING A SEMI-AROMATIC POLYAMIDE AND AN ALIPHATIC POLYAMIDE FOR IMPROVING THE MECHANICAL PROPERTIES OF THE MIXTURE

(30) Priorité: 19.10.2016 FR 1660126; 23.03.2017 FR 1752407
(43) Date de publication de la demande: 28.08.2019
(73) Titulaire: Arkema France, 92700 Colombes (FR)
(72) Inventeur: BRULE, Benoît, 27170 Beaumont-Le-Roger (FR); BREUIL, Antoine, Tokyo-to 112-0003 (JP); WANG, Hao, Jiangsu 215522 (CN); YAO, Xiong, Jiangsu 215522 (CN)
(74) Mandataire: Arkema Patent
(86) Numéro de dépôt international: PCT/FR2017/052867
(87) Numéro de publication internationale: WO 2018/073537

(56) Documents cités:
- EP-A1- 1 972 659
- EP-A1- 2 792 714
- US-A- 4 822 846
- US-A1- 2011 105 655
- US-A1- 2016 130 439

## Description

La présente invention concerne l'utilisation de fibres de verre à section circulaire dans un mélange comprenant au moins un polyamide MXDZ et au moins un polyamide aliphatique, notamment semi-cristallin, pour améliorer l'élongation à la rupture, après sa mise en oeuvre, en particulier par injection ou moulage par compression.

De nombreuses applications dans le domaine E/E demandent des matériaux très rigides (coque de téléphone, pièce ordinateur...). La rigidité est d'autant plus importante que la tendance marché va vers une diminution du poids des équipements électroniques et donc vers une réduction des épaisseurs des pièces.

Toutefois, la réalisation de pièces de faible épaisseur amène d'autres problématiques : aptitude à être injectées, en particulier matériaux suffisamment fluides pour remplir complètement le moule et surtout lesdites pièces dont l'épaisseur se trouve réduite doivent présenter des propriétés mécaniques, en particulier l'allongement à la rupture, suffisantes après sa mise en oeuvre, en particulier par injection ou moulage par compression pour supporter les sollicitations durant la durée de vie du produit.

Dans ces applications, les polyamides (PA) rigides (module > 12GPa) trouvent une grande place. Mais dès lors que le taux de fibres est supérieur à 30%, l'utilisation de fibres à section transversale non circulaire ou plate (FF) est la solution retenue pour satisfaire l'ensemble du cahier des charges, en particulier les aspects de gauchissement et de propriétés mécaniques.

Ainsi, la demande EP2789591 [0003] indique que les fibres de verre à section transversale non circulaire permettent d'améliorer les propriétés mécaniques, la précision dimensionnelle et le gauchissement de résines renforcées avec lesdites fibres de verre à section non circulaire. Ceci est dû, selon cette demande, pour ce qui concerne l'amélioration des propriétés mécaniques, au fait que les fibres de verre à section non circulaire ont une surface de contact supérieure à celle des fibres à section circulaire.

La demande US 2011/0105655 décrit des compositions présentant une faible distorsion lors du moulage et constituées de 25 à 72% en poids d'un polyamide, de 20 à 65% en poids fibres de verre à section plate de ratio UD de 2 à 8, et de 8 à 25% d'un agent ignifugeant (L représentant la grande dimension de la section transverse de la fibre et D la petite dimension de la section transverse de ladite fibre). Le polyamide utilisé est un mélange de 55-90% en poids d'un polyamide aliphatique et de 10 à 45% en poids d'un autre polyamide choisi parmi MACM10-18, MACMI, MACMT, MXDI, MXDT, MXDX/MXDI, PACM10-18, 6I, 6T, 6I/6T et 6T/66 par rapport à la somme totale des polyamides.

Les valeurs d'élongation à la rupture présentées dans les exemples de cette demande sont comprises de 1,3 à 1,5% pour des mélanges de PAXY (PA66) et de PA6 ou PA6I/6T (MXDZ n'est pas exemplifié) comprenant des fibres de verre, quelle que soit la forme des fibres, à section plate ou circulaire. De plus, l'utilisation de fibres de verre à section plate conduit toujours à une élongation à la rupture supérieure à celle obtenue avec les fibres de verre à section circulaire.

Le brevet JP5523520 décrit quant à lui des granules de polyamide ayant des propriétés électriques et de résistance à la déformation.

Les granules sont constituées de 5-40 parts en poids d'un agent ignifugeant, de 5-200 parts en poids d'une fibre de verre à section plate avec un ratio UD d'au moins 2,3 et de 0-40 parts en poids d'un polyamide qui peut être un mélange de polyamide aliphatique avec un polyamide semi-aromatique tel que MXD10.

Le brevet US 4 822 846 décrit des compositions contenant du PA MXD10 du PA 610 et des fibres de verre à section circulaire ainsi que des additifs optionnels.

La demande US 2016/130439 A1 divulgue des compositions comprenant une quantité majoritaire d'un polyamide aliphatique et une quantité minoritaire d'un polyamide semi-aromatique contenant des fibres de verre à section circulaires. EP 2 792 714 A1 décrit un article moulé obtenu à partir d'une composition comprenant un polyamide aliphatique et un polyamide MXD10.

Néanmoins, ces différentes compositions de l'art antérieur et notamment avec des fibres de verre à section plates conduisent à des compositions présentant propriétés mécaniques qui peuvent être insuffisantes pour une application E/E.

Par ailleurs, l'utilisation de fibres de verre à section plate par rapport aux fibres de verre à section circulaire engendre un surcoût non négligeable. De plus les fournisseurs de fibres de verre à section plate sont beaucoup moins nombreux que les fournisseurs de fibre de verre à section circulaire. Ces deux aspects sont essentiels dans la cadre de la production industrielle de résines renforcées en fibres de verre.

Il est donc nécessaire de pouvoir disposer de compositions utilisant des fibres de verres à section circulaire, permettant ainsi de limiter le coût de la dite composition et de s'assurer d'un approvisionnement pérenne en fibres de verre à section circulaire et de disposer de compositions présentant des propriétés mécaniques améliorées notamment l'élongation à la rupture, après sa mise en oeuvre, en particulier par injection ou moulage par compression, par rapport aux fibres de verre à section plate.

Ces différents problèmes ont été résolus avec l'utilisation de fibres de verre à section circulaire avec un mélange spécifique à base de polyamide aliphatique et de MXDZ. Les inventeurs ont en effet trouvé de manière inattendue que l'ajout de fibres de verre à section circulaire dans un mélange comprenant au moins un polyamide MXDZ, et au moins un polyamide aliphatique, notamment semi-cristallin, permettait d'améliorer les propriétés mécaniques de ladite composition, notamment l'élongation à la rupture, après sa mise en oeuvre, en particulier par injection ou moulage par compression par rapport à la même composition comprenant des fibres de verre à section plate au lieu de fibres de verre à section circulaire.

Un autre avantage de l'invention est que lesdites compositions présentent un gauchissement limité lors de la mise en oeuvre en particulier par injection ou moulage par compression de la composition, c'est-à-dire un gauchissement inférieur à 2mm, en particulier inférieur à 1 mm tel que déterminé sur des plaques de 100*100*1 mm³.

Le gauchissement peut être totalement supprimé mais en règle générale, il est inférieur à 2mm, en particulier inférieur à 1 mm.

La présente invention concerne l'utilisation de fibres de verre à section circulaire dans un mélange comprenant au moins un polyamide MXDZ, obtenu à partir de la polycondensation de la meta-xylylène diamine (MXD), avec un acide dicarboxylique aliphatique (Z) en C₆ à C₁₈, en particulier en C₆ à C₁₂, et au moins un polyamide aliphatique A obtenu à partir de la polycondensation d'un motif choisi parmi :
- un lactame en C₆ à C₁₂,
- un aminoacide en C₆ à C₁₂, et
- un motif XY obtenu à partir de la polycondensation d'une diamine aliphatique (X) en C₄ à C₁₈, en particulier en C₄ à C₁₂, et un acide dicarboxylique aliphatique (Y) en C₆ à C₁₈, en particulier en C₆ à C₁₂, des fibres de verre à section circulaire et optionnellement au moins un modifiant choc et/ou au moins un additif,

lesdites fibres de verre à section circulaire et ledit mélange constituant une composition,
lesdites fibres de verre à section circulaire étant présentes de 30 à 75% en poids, en particulier de 40 à 65% en poids et par rapport au poids total de la composition,
pour améliorer l'élongation à la rupture, après sa mise en oeuvre, en particulier par injection ou moulage par compression.

La meta-xylylène diamine (MXD, numéro CAS 1477-55-0) peut être utilisée seule ou en mélange avec de la para-xylylène diamine (PXD, numéro CAS 539-48-0). Mais dans ce dernier cas, et dans toute la description, la MXD doit être majoritaire par rapport à la PXD.

Avantageusement, la MXD est utilisée seule et la composition est donc dépourvue de PXD.

L'acide dicarboxylique aliphatique (Z) en C₆ à C₁₈ peut être choisi parmi l'acide adipique, l'acide subérique, l'acide azélaïque, l'acide sébacique, l'acide undécanedioïque, l'acide dodécanedioïque, l'acide brassylique, l'acide tétradécanedioïque, l'acide pentadécanedioïque, l'acide hexadécanedioïque, l'acide octadécanedioïque.

Avantageusement, l'acide dicarboxylique aliphatique (Z) est en C₇ à C₁₈ et peut être choisi parmi l'acide subérique, l'acide azélaïque, l'acide sébacique, l'acide undécanedioïque, l'acide dodécanedioïque, l'acide brassylique, l'acide tétradécanedioïque, l'acide pentadécanedioïque, l'acide hexadécanedioïque, l'acide octadécanedioïque.

L'acide dicarboxylique aliphatique (Z) n'est pas un mélange d'acides dicarboxyliques aliphatiques en C₆ à C₁₈, ou C₇ à C₁₈ ci-dessus définis et le MXDZ correspond donc à un homopolyamide.

Néanmoins, MXDZ peut correspondre à un mélange de MXDZ.

Dans le cas où la MXD est en mélange avec la PXD, alors MXDZ correspond donc à un copolyamide MXDZ/PXDZ à condition que la proportion molaire de MXDZ dans le copolyamide soit majoritaire par rapport à celle PXDZ.

Avantageusement, la MXD est dépourvue de PXD et MXDZ est un homopolyamide. Avantageusement, l'acide dicarboxylique aliphatique (Z) en C₆ à C₁₂ peut être choisi parmi l'acide adipique, l'acide subérique, l'acide azélaïque, l'acide sébacique, l'acide undécanedioïque, l'acide dodécanedioïque.

Plus avantageusement, l'acide dicarboxylique aliphatique (Z) en C₇ à C₁₂ peut être choisi parmi l'acide subérique, l'acide azélaïque, l'acide sébacique, l'acide undécanedioïque, l'acide dodécanedioïque.

L'expression « polyamide aliphatique » signifie un homopolyamide à l'exclusion d'un copolyamide. Il est bien entendu qu'il peut s'agir d'un mélange de polyamides aliphatiques. Le polyamide aliphatique A est donc un homopolyamide.

La nomenclature utilisée pour définir les polyamides est décrite dans la norme ISO 1874-1:2011 "Plastiques - Matériaux polyamides (PA) pour moulage et extrusion - Partie 1 : Désignation", notamment en page 3 (tableaux 1 et 2) et est bien connue de l'homme du métier.

Lorsque le polyamide aliphatique A est obtenu à partir de la polycondensation d'un lactame ledit lactame peut être choisi parmi la pyrrolidinone, la 2-pipéridinone, le caprolactame, l'énantholactame, le caprolactame, le pelargolactame, le décanolactame, l'undécanolactame, et le lauryllactame, en particulier le lauryllactame. Lorsque le polyamide aliphatique A est obtenu à partir de la polycondensation d'un aminoacide, il peut être choisi parmi l'acide 9-aminononanoïque, l'acide 10-aminodécanoïque, l'acide 10-aminoundécanoïque, l'acide 12-aminododécanoïque et l'acide 11-aminoundécanoïque ainsi que ses dérivés, notamment l'acide N-heptyl-11-aminoundécanoïque, en particulier l'acide 11-aminoundécanoïque.

Lorsque le polyamide aliphatique A est obtenu à partir de la polycondensation d'un motif XY, la diamine (X) en C₄ à C₁₈ utilisée dans le polyamide XY est une diamine linéaire ou ramifiée, et peut être en particulier choisi parmi la 1,4-butanediamine, 1,5-pentanediamine, la 2-méthyl-1,5-pentanediamine, la 1,6-hexaméthylènediamine la 1,7-heptanediamine, la 1,8-octanediamine, la 1,9-nonanediamine, la 2-méthyl-1,8-octanediamine, la 2,2,4-triméthylhexaméthylènediamine, la 2,4,4-triméthylhexaméthylènediamine, la 1,10-décanediamine, 1,11-undécanediamine, la 2-butyl-2-éthyl-1,5-pentanediamine, la 1,12-dodécanediamine, la 1,13-tridécanediamine, la 1,14-tétradécanediamine, la 1,16-hexadécanediamine et la 1,18-octadécanediamine. Avantageusement, la diamine (X) utilisée est en C₄ à C₁₂, en particulier choisi parmi la 1,4-butanediamine, 1,5-pentaméthyldiamine, 2-méthyl-1,5-pentanediamine, la 1,6-hexaméthylènediamine, la 1,7-heptanediamine, la 1,8-octanediamine, la 1,9-nonanediamine, la 2-méthyl-1,8-octane-diamine, la 2,2,4-triméthylhexaméthylènediamine, la 2,4,4-triméthylhexaméthylènediamine, la 1,10-décanediamine, 1,11-undécanediamine, la 2-butyl-2-éthyl-1,5-pentanediamine, la 1,12-dodécanediamine.

Avantageusement, la diamine (X) utilisée est en C₆ à C₁₀, en particulier choisi parmi la 2-méthyl-1,5-pentanediamine, la 1,6-hexaméthylènediamine la 1,7-heptanediamine, la 1,8-octanediamine, la 1,9-nonanediamine, la 2-méthyl-1,8-octane-diamine, la 2,2,4-triméthylhexaméthylènediamine, la 2,4,4-triméthylhexaméthylènediamine, la 1,10-décanediamine.

Lorsque le polyamide aliphatique A est obtenu à partir de la polycondensation d'un motif XY, l'acide dicarboxylique aliphatique (Y) en C₆ à C₁₈, en particulier en C₆ à C₁₂, utilisé dans le polyamide XY, est tel que défini ci-dessus.

Par fibre de verre au sens de l'invention, on entend toute fibre de verre, notamment telle que décrite par Frederick T. Wallenberger, James C. Watson and Hong Li, PPG industries Inc. (ASM Handbook, Vol 21 : composites (#06781G), 2001 ASM International), à condition que ladite fibre soit à section circulaire.

Avantageusement, lesdites fibres de verre présentent un diamètre compris de 4 µm à moins de 25µm, de préférence de 4 à 15 microns et un ratio UD (L représentant la grande dimension de la section transverse de la fibre et D la petite dimension de la section transverse de ladite fibre) inférieur à 2, en particulier inférieur à 1,5.

Avantageusement, le ratio UD est égal à environ 1.

Par l'expression « modifiant choc », il faut entendre un polymère à base polyoléfine présentant un module de flexion inférieur à 100 MPa mesuré à 23°C selon la norme ISO 178 :2010 et de Tg inférieure à 0°C (mesurée selon la norme 11357-2 au niveau du point d'inflexion du thermogramme DSC), en particulier une polyoléfine, couplée ou non avec un Peba (polyether block amide) ayant un module de flexion < 200 MPa. On ne sortirait pas du cadre de l'invention en utilisant un Peba seul comme modifiant choc dans la composition.

La polyoléfine du modifiant choc peut être fonctionnalisée ou non fonctionnalisée ou être un mélange d'au moins une fonctionnalisée et/ou d'au moins une non fonctionnalisée.

Notamment, une partie ou la totalité des polyoléfines porte une fonction choisie parmi les fonctions acide carboxylique, anhydride carboxylique et époxyde, et est en particulier choisie parmi un copolymère d'éthylène et de propylène à caractère élastomère (EPR), un copolymère éthylène-propylène-diène à caractère élastomère (EPDM) et un copolymère éthylène/(meth)acrylate d'alkyle, un copolymère éthylène-alcène supérieur, en particulier un copolymère éthylène-octène, un terpolymère éthylène-acrylate d'alkyle-anhydride maléique.

Avantageusement, le modifiant choc est choisi parmi le F493^{®}, un Pebax^{®}, en particulier le Pebax^{®} 40R53 SP 01, un Lotader^{®}, en particulier le Lotader^{®} 5500 ou le Lotader^{®} 7500, le Exxelor VA1803^{®}, ou un mélange de ceux-ci, dans ce cas ils sont dans un rapport allant de 0,1/99,9 à 99,9/0,1, préférentiellement 1/2 à 2/1 lorsqu'ils sont en mélange de deux.

A titre d'exemple, le modifiant choc est choisi parmi les mélanges suivants : F493^{®}/Lotader^{®}, en particulier F493^{®}/Lotader^{®} 5500 ou F493^{®}/Lotader^{®} 7500.

Le modifiant choc peut également être un modifiant de type « core-shell », également désigné « copolymère de type coeur-écorce ».

Le modifiant de type « core-shell » se présente sous la forme de fines particules ayant un coeur en élastomère et au moins une écorce thermoplastique, la taille des particules est en général inférieure au µm et avantageusement comprise de 150 à 500 nm.

Le modifiant de type « core-shell » possède une base acrylique ou butadiène contrairement au modifiant choc qui possède une base polyoléfine. Avantageusement, la proportion de modifiant choc est comprise de 0 à 10% en poids par rapport au poids total de la composition.

L'utilisation de fibres de verre à section circulaire dans le mélange comprenant au moins un MXDZ et au moins un polyamide aliphatique constitue une composition. Avantageusement, ladite composition est dépourvue d'ignifugeant.

Avantageusement, ladite composition est dépourvue de PA66.

Avantageusement, ladite composition est dépourvue d'ignifugeant et de PA66.

Avantageusement, ladite composition est dépourvue d'ignifugeant et de PA 6 et PA66. Les additifs optionnellement utilisés dans la composition obtenue avec l'utilisation de fibres de verres dans un mélange de MXDZ et polyamide aliphatique A sont les additifs classiques utilisés dans les polyamides et bien connus de l'homme du métier. L'expression « améliorer les propriétés mécaniques de ladite composition, notamment l'élongation à la rupture » signifie supporter une déformation suffisante durant l'application.

Avantageusement, le rapport en poids MXDZ/A dans ladite composition est compris de 0,11 à 0,83, en particulier de 0,11 à 0,66.

Par conséquent, dans ce mode de réalisation, le polyamide semi-aromatique MXDZ est toujours en proportion inférieure au polyamide aliphatique A ou au mélange de polyamides aliphatiques A.

Avantageusement, le polyamide aliphatique A est un polyamide semi-cristallin ou un mélange de polyamides semi-cristallins.

Avantageusement, le polyamide aliphatique A est un polyamide semi-cristallin. L'expression « polyamide semi-cristallin » au sens de l'invention désigne des polyamides qui présentent une température de fusion (Tf) et une enthalpie de fusion ΔH > 10 J/g, en particulier > 12 J/g ainsi qu'une température de transition vitreuse (Tg) tels que déterminés par DSC selon la norme ISO 11357-1 :2009 et ISO 11357-2 et 3 :2013, à une vitesse de chauffe de 20K/min.

Avantageusement, l'élongation à la rupture de ladite composition après sa mise en oeuvre, en particulier par injection ou moulage par compression, est augmentée jusqu'à 30% par rapport à la même composition comprenant des fibres de verre à section plate au lieu de fibres de verre à section circulaire.

En particulier, ladite augmentation de ladite élongation à la rupture est comprise de 10 à 30%.

Avantageusement, ladite composition constituée par l'utilisation desdites fibres de verre à section circulaire avec ledit mélange comprend :
- de 5 à 30% en poids, en particulier de 5 à 20% en poids de MXDZ,
- de 20 à 60% en poids, en particulier de 25 à 50% en poids dudit au moins un polyamide A,
- de 30 à 75% en poids, en particulier de 40 à 65% en poids de fibres de verre à section circulaire,
- de 0 à 10% d'au moins un modifiant choc,
- de 0 à 2% d'au moins un additif.

La somme des proportions de chaque constituant de la composition étant égale à 100%.

Avantageusement, ladite composition constituée ci-dessus est l'une des suivantes (les pourcentages sont indiqués en poids) :

| N° COMPOSITION | MXDZ | Polyamide aliphatique A | Fibres de verre |
|---|---|---|---|
| 1 | 5-30% | 20-60% | 30-75% |
| 2 | 5-30% | 20-60% | 40-65% |
| 3 | 5-30% | 25-50% | 30-75% |
| 4 | 5-30% | 25-50% | 40-65% |
| 5 | 5-20% | 20-60% | 30-75% |
| 6 | 5-20% | 20-60% | 40-65% |
| 7 | 5-20% | 25-50% | 30-75% |
| 8 | 5-20% | 25-50% | 40-65% |

La somme des constituants de chaque composition 1 à 8 est égale à 100%.

Chacune des compositions 1 à 8 ci-dessus peut de plus comprendre au moins un modifiant choc jusqu'à 10% en poids, la somme des constituants étant égale à 100%. Chacune des compositions 1 à 8 ci-dessus peut de plus comprendre au moins un additif jusqu'à 2% en poids, la somme des constituants étant égale à 100%.

Chacune des compositions 1 à 8 ci-dessus peut de plus comprendre au moins un modifiant choc jusqu'à 10% en poids et au moins un additif jusqu'à 2% en poids, la somme des constituants étant égale à 100%.

Avantageusement, le MXDZ utilisé dans l'une des compositions ci-dessus définies comprend du MXD10.

Le MXD10 est donc en mélange avec au moins un autre MXDZ, Z étant un acide dicarboxylique en C₆ à C₁₈, en particulier en C₇ à C₁₈, tel que ci-dessus défini, notamment en proportion supérieure à 50% en poids par rapport à la somme totale des polyamides MXDZ.

Avantageusement, le MXDZ utilisé dans l'une des compositions ci-dessus définies est constitué de MXD10 et de MXD6.

Avantageusement, le MXDZ utilisé dans l'une des compositions ci-dessus définies est constitué de MXD10.

Avantageusement, le polyamide aliphatique A comprend un polyamide aliphatique obtenu à partir de la polycondensation d'un motif XY dont l'acide dicarboxylique (Y) est de l'acide sébacique.

Avantageusement, ledit polyamide aliphatique A obtenu à partir de la polycondensation d'un motif XY dont l'acide dicarboxylique (Y) est de l'acide sébacique est en proportion supérieure à 50% en poids par rapport au poids total des polyamides aliphatique A. Avantageusement, ledit polyamide aliphatique A obtenu à partir de la polycondensation d'un motif XY correspond à un seul polyamide dont l'acide dicarboxylique (Y) est de l'acide sébacique.

Avantageusement, le polyamide aliphatique A comprend un polyamide aliphatique obtenu à partir de la polycondensation d'un motif XY dont la diamine (X) est en C₆ à C₁₀.

Le polyamide aliphatique A est donc un mélange d'au moins deux polyamides XY dont la diamine (X) est en C₆ à C₁₀, les diamines étant différentes l'une de l'autre, en particulier.

Avantageusement, ledit polyamide aliphatique A obtenu à partir de la polycondensation d'un motif XY dont la diamine (X) est en C₆ à C₁₀ est en proportion supérieure à 50% en poids par rapport au poids total des polyamides XY.

Avantageusement, ledit polyamide aliphatique A obtenu à partir de la polycondensation d'un motif XY est constitué d'un polyamide XY dont la diamine (X) est en C₆ à C₁₀.

En particulier, la diamine (X) est choisie parmi l'hexaméthylène diamine et la décanediamine.

Avantageusement, ledit au moins MXDZ est constitué de 0% à 49% en poids de MXD6 et 51 à 100% en poids de MXD10 et ledit polyamide aliphatique A obtenu à partir de la polycondensation d'un motif XY est constitué de 0 à 49% en poids de PA610 et de 51 à 100% en poids de PA1010.

Avantageusement, MXDZ est constitué de MXD10 et ledit polyamide aliphatique A obtenu à partir de la polycondensation d'un motif XY est constitué de 0 à 49% en poids de PA610 et de 51 à 100% en poids de PA1010.

Avantageusement, MXDZ est constitué de MXD10 et ledit polyamide aliphatique A obtenu à partir de la polycondensation d'un motif XY est constitué de PA1010.

Avantageusement, ledit au moins MXDZ est constitué de 0% à 49% en poids de MXD6 et 51 à 100% en poids de MXD10 et ledit polyamide aliphatique A obtenu à partir de la polycondensation d'un motif XY est constitué de 0 à 49% en poids de PA1010 et de 51 à 100% en poids de PA610.

Avantageusement, MXDZ est constitué de MXD10 et ledit polyamide aliphatique A obtenu à partir de la polycondensation d'un motif XY est constitué de 0 à 49% en poids de PA1010 et de 51 à 100% en poids de PA610.

Avantageusement, MXDZ est constitué de MXD10 et ledit polyamide aliphatique A obtenu à partir de la polycondensation d'un motif XY est constitué de PA610.

Avantageusement, ledit polyamide aliphatique A est obtenu à partir de la polycondensation d'un lactame ou d'un aminoacide, en particulier du lauryllactame ou de l'acide aminoundécanoïque.

Avantageusement, MXDZ est constitué de MXD10 et ledit polyamide aliphatique A est obtenu à partir de la polycondensation de lauryllactame.

Avantageusement, MXDZ est constitué de MXD10 et ledit polyamide aliphatique A est obtenu à partir de la polycondensation de l'acide 11-aminoundécanoïque.

Dans un mode de réalisation avantageux, ledit au moins un additif de ladite composition constituée par l'utilisation desdites fibres de verre à section circulaire avec ledit mélange est choisi parmi les charges, les colorants, les stabilisants, les plastifiants, les agents tensioactifs, les agents nucléants, les pigments, les azurants, les antioxydants, les lubrifiants, les ignifugeants, les cires naturelles et leurs mélanges. Dans un mode de réalisation avantageux, ladite composition constituée par l'utilisation desdites fibres de verre à section circulaire avec ledit mélange comprend :
- de 5 à 30% en poids, en particulier de 5 à 20% en poids, d'un polyamide MXD10, obtenu à partir de la polycondensation de la meta-xylylène diamine (MXD) ou un mélange de meta-xylylène diamine et de para-xylylène diamine, avec l'acide sébacique,
- de 20 à 60% en poids, en particulier de 25 à 50% de PA1010 obtenu à partir de la polycondensation de la décanediamine et de l'acide sébacique,
- de 30 à 75% en poids, en particulier de 40 à 65% en poids de fibres de verre à section circulaire,
- de 0 à 10% en poids d'au moins un modifiant choc,
- de 0 à 2% d'au moins un additif.

Dans un mode de réalisation avantageux, ladite composition constituée par l'utilisation desdites fibres de verre à section circulaire avec ledit mélange comprend :
- de 5 à 30% en poids, en particulier de 5 à 20% en poids, d'un polyamide MXD10, obtenu à partir de la polycondensation de la meta-xylylène diamine (MXD) ou un mélange de méta-xylylène diamine et de para-xylylène diamine, avec l'acide sébacique,
- de 20 à 60% en poids, en particulier de 25 à 50% de PA610 obtenu à partir de la polycondensation de l'hexaméthylène diamine et de l'acide sébacique,
- de 30 à 75% en poids, en particulier de 40 à 65% en poids de fibres de verre à section circulaire,
- de 0 à 10% en poids d'au moins un modifiant choc,
- de 0 à 2% d'au moins un additif.

Avantageusement, le MXDZ des compositions 1 à 8 ci-dessus définie est le MXD10 et le PAXY est le PA1010.

Avantageusement, le MXDZ des compositions 1 à 8 ci-dessus définie est le MXD10 et le PAXY est le PA610.

Avantageusement, le MXDZ des compositions 1 à 8 ci-dessus définie est le MXD10 et le polyamide aliphatique A est le PA1012.

Avantageusement, le MXDZ des compositions 1 à 8 ci-dessus définie est le MXD10 et le polyamide aliphatique A est le PA12.

Avantageusement, le MXDZ des compositions 1 à 8 ci-dessus définie est le MXD10 et le polyamide aliphatique A est le PA11.

La composition ci-dessus définie peut être utilisée pour constituer une structure monocouche ou au moins une couche d'une structure multicouche.

En particulier, ladite structure se présente sous la d'une pièce injectée.

La composition ci-dessus définie peut être également utilisée pour constituer un objet. Ledit objet peut être mis en forme par un procédé comprenant une étape de moulage par injection de ladite composition.

Ledit objet peut être utilisé dans le domaine électrique et/ou de l'électronique.

### DESCRIPTION DES FIGURES

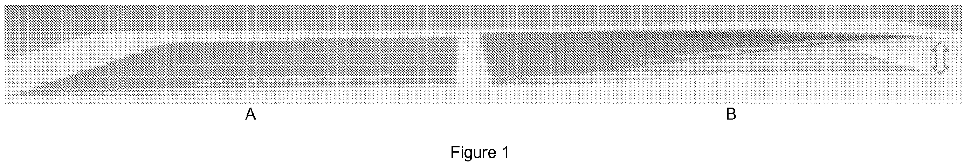

La figure 1 (A et B) présente le gauchissement obtenu avec 2 plaques (100*100*1 mm³) injectées par :
A : composition I1 ou I2 utilisée selon l'invention,
B : composition C1 ou C4,
et mesuré tel que décrit dans l'exemple 2.
A : plaque injectée I1 ou I2 dont le gauchissement est limité et inférieur à 1 mm,
B : plaque injectée C1 ou C4 dont le gauchissement est très important et supérieur à 5 mm.

### EXEMPLES

### Exemple 1 : Propriétés mécaniques

### Synthèse

Le PA610, PA1010 et le MXD10 ont été préparés séparément et respectivement par polycondensation d'hexaméthylène diamine et d'acide sébacique, de décanediamine et d'acide sébacique et de meta-xylylène diamine et d'acide sébacique selon les techniques bien connues de l'homme du métier.

### Compoundage

Les compositions ont été préparées par mélange à l'état fondu des granules de polymères. Ce mélange a été effectué par compoundage sur extrudeuse bi-vis co-rotative type MC26 avec un profil de T plat à 270°C. La vitesse de vis est de 250rpm. L'introduction des fibres de verre à section circulaire ou à section plate est effectuée en gavage latéral.

### Injection

Des plaques de 100*100*1 mm³ ont été préparées par injection des différentes compositions :
- Température d'injection (alimentation/buse) : 250/270°C et 270/300°C
- Température du moule : 65°C et 90°C et 100°C
- Temps de maintien : 10 secondes
- Temps de refroidissement : 20 et 30 secondes

Les compositions suivantes ont été préparées (Tableau 1) :

**TABLEAU 1**

| Composition | MXDZ (% en poids) | PAXY (% en poids) | Fibres verre à section circulaire (% en poids) Nittobo CSX3J451S0 | Fibres verre à section plate (% en poids) Nittobo CSG3PA820S |
|---|---|---|---|---|
| C1 | - | PA610 50% | 50% | - |
| C2 | - | PA610 50% | - | 50% |
| C3 | MXD10 15% | PA610 35% | - | 50% |
| I1 | MXD10 15% | PA610 35% | 50% | - |
| C4 | - | PA1010 45% | 55% | - |
| C5 | - | PA1010 45% | - | 55% |
| I2 | MXD10 15% | PA1010 30% | 55% | - |

| | | | | |
|---|---|---|---|---|
| C : Composition comparative I : Composition utilisée selon l'invention | | | | |

L'allongement à la rupture des compositions C2, C3 et I1 a été déterminé selon la norme ISO 527.

La machine mécanique est un INSTRON 5966. La vitesse de la traverse est de 1mm/min. Les conditions de test sont 23°C, 50% HR. Les échantillons de géométrie ISO 527 1A ayant été au préalable conditionnés 2 semaines à 23°C, 50% HR. La déformation est mesurée par un extensomètre à contact.

Les résultats sont présentés dans le tableau 2 (essai sur cinq échantillons) :

**TABLEAU 2**

| Composition | Elongation à la rupture | |
|---|---|---|
| | % | écart type |
| C2 | 2,7 | 0,08 |
| C3 | 2,6 | 0,07 |
| I1 | 3,6 | 0,09 |

Le tableau 2 montre que la composition utilisée selon l'invention présente un pourcentage d'élongation à la rupture augmenté de 30% par rapport à la même composition avec des fibres de verre à section plate au lieu de fibres de verre à section circulaire ou à une composition constituée de PA610 et fibres de verre à section plate.

### Exemple 2 : Evaluation du gauchissement de compositions de polyamides à base de PA610 ou PA1010, MXD10 et de fibres de verre à section circulaire ou à section plate.

Le gauchissement a été évalué selon la méthode décrite ci-dessous :
Les plaques injectées sont posées sur une table. L'opérateur appuie sur 3 angles de la plaque pour faire remonter le quatrième. On mesure alors l'écart entre la surface de la table et l'échantillon, voir la flèche de la figure 1. Sur l'échantillon de gauche sur la figure 1 (A), le gauchissement est limité, c'est-à-dire inférieur à 1mm.

Les résultats sont présentés sur le tableau 3 suivant :

**TABLEAU 3**

| Composition | Gauchissement |
|---|---|
| C1 | Très important >5mm* |
| C2 | <1mm |
| I1 | <1mm |
| C4 | Très important >5mm |
| C5 | <1mm |
| I2 | <1mm |

| | |
|---|---|
| *Le gauchissement est très important quelles que soient les conditions d'injection (différentes T, différentes T de moule, température de refroidissement...) C : Composition comparative I : Composition selon l'invention | |

Le tableau 3 montre que l'introduction de fibres verre à section circulaire dans un polyamide XY aliphatique dépourvu de MXDZ induit un gauchissement important qui est pratiquement supprimé par introduction de MXDZ et ce même pour une proportion aussi importante que 50% en poids de fibres de verre à section circulaire.

## Revendications

1. Utilisation de fibres de verre à section circulaire dans un mélange comprenant au moins un polyamide MXDZ, obtenu à partir de la polycondensation de la meta-xylylène diamine (MXD), avec un acide dicarboxylique aliphatique (Z) en C₆ à C₁₈, en particulier en C₆ à C₁₂, et au moins un polyamide aliphatique A obtenu à partir de la polycondensation d'un motif choisi parmi :
- un lactame en C₆ à C₁₂,
- un aminoacide en C₆ à C₁₂, et
- un motif XY obtenu à partir de la polycondensation d'une diamine aliphatique (X) en C₄ à C₁₈, en particulier en C₄ à C₁₂ et un acide dicarboxylique aliphatique (Y) en C₆ à C₁₈, en particulier en C₆ à C₁₂, des fibres de verre à section circulaire et optionnellement au moins un modifiant choc et/ou au moins additif,
lesdites fibres de verre à section circulaire et ledit mélange constituant une composition,
lesdites fibres de verre à section circulaire étant présentes de 30 à 75% en poids, en particulier de 40 à 65% en poids et par rapport au poids total de la composition,
pour améliorer l'élongation à la rupture, après sa mise en oeuvre, en particulier par injection ou moulage par compression, l'élongation à la rupture étant mesurée par la norme ISO 527.

2. Utilisation selon la revendication 1, **caractérisée en ce que** le rapport en poids MXDZ/A étant compris de 0,11 à 0,83.

3. Utilisation selon la revendication 1 ou 2, **caractérisée en ce que** l'élongation à la rupture de ladite composition est augmentée jusqu'à 30% par rapport à la même composition comprenant des fibres de verre à section plate au lieu de fibres de verre à section circulaire.

4. Utilisation selon l'une des revendications 1 à 3, **caractérisée en ce que** ladite composition comprend :
- de 5 à 30% en poids, en particulier de 5 à 20% en poids de MXDZ,
- de 20 à 60% en poids, en particulier de 25 à 50% en poids dudit au moins un polyamide A,
- de 30 à 75% en poids, en particulier de 40 à 65% en poids de fibres de verre à section circulaire,
- de 0 à 10% d'au moins un modifiant choc,
- de 0 à 2% d'au moins un additif,
la somme des proportions de chaque constituant de la composition étant égale à 100%.

5. Utilisation selon l'une des revendications 1 à 4, **caractérisée en ce que** MXDZ correspond à MXD10.

6. Utilisation selon l'une des revendications 1 à 5, **caractérisée en ce que** le polyamide aliphatique A est obtenu à partir de la polycondensation d'un motif XY, et Y correspond à l'acide sébacique.

7. Utilisation selon l'une des revendications 1 à 6, **caractérisé en ce que** le polyamide aliphatique A est obtenu à partir de la polycondensation d'un motif XY, et X correspond à une diamine en C₆ à C₁₀.

8. Utilisation selon l'une des revendications 1 à 7, **caractérisée en ce que** le polyamide aliphatique A est obtenu à partir de la polycondensation d'un motif XY, et X est choisi parmi l'hexaméthylène diamine et la décanediamine.

9. Utilisation selon l'une des revendications 1 à 8, **caractérisée en ce que** ledit au moins un additif est choisi parmi les charges, les colorants, les stabilisants, les plastifiants, les agents tensioactifs, les agents nucléants, les pigments, les azurants, les antioxydants, les lubrifiants, les ignifugeants, les cires naturelles et leurs mélanges.

## Patentansprüche

1. Verwendung von Glasfasern mit kreisförmigem Querschnitt in einer Mischung, umfassend mindestens ein MXDZ-Polyamid, das durch Polykondensation von meta-Xylylendiamin (MXD) mit einer aliphatischen C₆- bis C₁₈-, insbesondere C₆- bis C₁₂-Dicarbonsäure (Z) erhalten wird, und mindestens ein aliphatisches Polyamid A, das durch Polykondensation einer Einheit erhalten wird, die ausgewählt ist aus:
- einem C₆- bis C₁₂-Lactam,
- einer C₆- bis C₁₂-Aminosäure und
- einer Einheit XY, die durch Polykondensation eines aliphatischen C₄- bis C₂₈-, insbesondere C₄- bis C₁₂-Diamins (X) und einer aliphatischen C₆- bis C₁₈-, insbesondere C₆- bis C₁₂-Dicarbonsäure (Y) erhalten wird, Glasfasern mit kreisförmigem Querschnitt und optional mindestens einem Schlagzäh-Modifikator und/oder mindestens einem Additiv,
wobei die Glasfasern mit kreisförmigem Querschnitt und die Mischung eine Zusammensetzung bilden,
wobei die Glasfasern mit kreisförmigem Querschnitt mit 30 bis 75 Gew.-%, insbesondere 40 bis 65 Gew.-% bezogen auf das Gesamtgewicht der Zusammensetzung vorhanden sind, zur Verbesserung der Bruchdehnung, nach ihrer Verarbeitung, insbesondere durch Spritzgießen oder Formpressen, wobei die Bruchdehnung durch die Norm ISO 527 gemessen wird.

2. Verwendung nach Anspruch 1, **dadurch gekennzeichnet, dass** das Gewichtsverhältnis MXDZ/A 0,11 bis 0,83 beträgt.

3. Verwendung nach Anspruch 1 oder 2, **dadurch gekennzeichnet, dass** die Bruchdehnung der Zusammensetzung bis zu 30 % bezogen auf dieselbe Zusammensetzung, die Glasfasern mit flachem Querschnitt anstelle von Glasfasern mit kreisförmigem Querschnitt umfasst, erhöht ist.

4. Verwendung nach einem der Ansprüche 1 bis 3, **dadurch gekennzeichnet, dass** die Zusammensetzung umfasst:
- 5 bis 30 Gew.-%, insbesondere 5 bis 20 Gew.-% MXDZ,
- 20 bis 60 Gew.-%, insbesondere 25 bis 50 Gew.-% des mindestens einen Polyamids A,
- 30 bis 75 Gew.-%, insbesondere 40 bis 65 Gew.-% Glasfasern mit kreisförmigem Querschnitt,
- 0 bis 10 Gew.-% mindestens eines Schlagzäh-Modifikators,
- 0 bis 2 Gew.-% mindestens eines Additivs,
wobei die Summe der Anteile jedes Bestandteils der Zusammensetzung 100 % beträgt.

5. Verwendung nach einem der Ansprüche 1 bis 4, **dadurch gekennzeichnet, dass** MXDZ MXD10 entspricht.

6. Verwendung nach einem der Ansprüche 1 bis 5, **dadurch gekennzeichnet, dass** das aliphatische Polyamid A durch Polykondensation einer Einheit XY erhalten wird und Y der Sebazinsäure entspricht.

7. Verwendung nach einem der Ansprüche 1 bis 6, **dadurch gekennzeichnet, dass** das aliphatische Polyamid A durch Polykondensation einer Einheit XY erhalten wird und X einem C₆- bis C₁₀-Diamin entspricht.

8. Verwendung nach einem der Ansprüche 1 bis 7, **dadurch gekennzeichnet, dass** das aliphatische Polyamid A durch Polykondensation einer Einheit XY erhalten wird und X aus Hexamethylendiamin und Decandiamin ausgewählt ist.

9. Verwendung nach einem der Ansprüche 1 bis 8, **dadurch gekennzeichnet, dass** das mindestens eine Additiv aus den Füllstoffen, den Farbstoffen, den Stabilisatoren, den Weichmachern, den grenzflächenaktiven Stoffen, den Nukleierungsmitteln, den Pigmenten, den Aufhellern, den Antioxidantien, den Schmiermitteln, den Flammschutzmitteln, den natürlichen Wachsen und ihren Mischungen ausgewählt ist.

## Claims

1. Use of glass fibres of circular cross section in a mixture comprising at least one polyamide MXDZ, obtained from the polycondensation of meta-xylylenediamine (MXD) with a C₆ to C₁₈, more particularly C₆ to C₁₂, aliphatic dicarboxylic acid (Z), and at least one aliphatic polyamide A obtained from the polycondensation of a unit chosen from:
- a C₆ to C₁₂ lactam,
- a C₆ to C₁₂ amino acid and
- a unit XY obtained from the polycondensation of a C₄ to C₁₈, more particularly C₄ to C₁₂, aliphatic diamine (X) and a C₆ to C₁₈, more particularly C₆ to C₁₂, aliphatic dicarboxylic acid (Y), glass fibres of circular cross section and optionally at least one impact modifier and/or at least one additive,
said glass fibres of circular cross section and said mixture constituting a composition,
said glass fibres of circular cross section being present at from 30% to 75% by weight, more particularly from 40% to 65% by weight and relative to the total weight of the composition,
for improving the elongation at break, after implementation thereof, more particularly by injection moulding or compression moulding, the elongation at break being measured by the standard ISO 527.

2. Use according to Claim 1, **characterized in that** the MXDZ/A weight ratio is from 0.11 to 0.83.

3. Use according to Claim 1 or 2, **characterized in that** the elongation at break of said composition is increased up to 30% relative to the same composition comprising glass fibres of flat cross section in place of glass fibres of circular cross section.

4. Use according to one of Claims 1 to 3, **characterized in that** said composition comprises:
- from 5% to 30% by weight, more particularly from 5% to 20% by weight, of MXDZ,
- from 20% to 60% by weight, more particularly from 25% to 50% by weight, of said at least one polyamide A,
- from 30% to 75% by weight, more particularly from 40% to 65% by weight, of glass fibres of circular cross section,
- from 0% to 10% of at least one impact modifier,
- from 0% to 2% of at least one additive,
the sum of the proportions of each constituent of the composition being equal to 100%.

5. Use according to one of Claims 1 to 4, **characterized in that** MXDZ corresponds to MXD10.

6. Use according to one of Claims 1 to 5, **characterized in that** the aliphatic polyamide A is obtained from the polycondensation of a unit XY and Y corresponds to sebacic acid.

7. Use according to one of Claims 1 to 6, **characterized in that** the aliphatic polyamide A is obtained from the polycondensation of a unit XY and X corresponds to a C₆ to C₁₀ diamine.

8. Use according to one of Claims 1 to 7, **characterized in that** the aliphatic polyamide A is obtained from the polycondensation of a unit XY and X is chosen from hexamethylenediamine and decanediamine.

9. Use according to one of Claims 1 to 8, **characterized in that** said at least one additive is chosen from fillers, dyes, stabilizers, plasticizers, surfactants, nucleating agents, pigments, optical brighteners, antioxidants, lubricants, flame retardants, natural waxes and mixtures thereof.
